(19) Europäisches Patentamt
European Patent Office
Office européen des brevets

(11) **EP 4 084 921 B1**

(12) **EUROPÄISCHE PATENTSCHRIFT**

(45) Veröffentlichungstag und Bekanntmachung des Hinweises auf die Patenterteilung:
**08.04.2026  Patentblatt 2026/15**

(21) Anmeldenummer: **20838379.4**

(22) Anmeldetag: **14.12.2020**

(51) Internationale Patentklassifikation (IPC):
**B22F 9/22** (2006.01)    **B22F 1/06** (2022.01)
**C22C 1/04** (2023.01)

(52) Gemeinsame Patentklassifikation (CPC):
**B22F 9/22; B22F 1/06;** Y02P 10/20

(86) Internationale Anmeldenummer:
**PCT/EP2020/085987**

(87) Internationale Veröffentlichungsnummer:
**WO 2021/136644 (08.07.2021 Gazette 2021/27)**

(54) **VERFAHREN ZUR HERSTELLUNG VON WOLFRAMMETALLPULVERN**

PROCESS FOR PRODUCING TUNGSTEN METAL POWDERS

PROCÉDÉ DE PRODUCTION DE POUDRES MÉTALLIQUES DE TUNGSTÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2019  DE 102019135890**

(43) Veröffentlichungstag der Anmeldung:
**09.11.2022  Patentblatt 2022/45**

(73) Patentinhaber: **H.C. Starck Tungsten GmbH 80339 München (DE)**

(72) Erfinder:
- **SAEUBERLICH, Tino 38667 Bad Harzburg (DE)**
- **MEESE-MARKTSCHEFFEL, Juliane 38642 Goslar (DE)**
- **WARNECKE, Knut 38690 Goslar (DE)**
- **HOESE, Beate 38644 Goslar (DE)**

(74) Vertreter: **dompatent Partnerschaft von Patentanwälten und Rechtsanwälten mbB Deichmannhaus am Dom Bahnhofsvorplatz 1 50667 Köln (DE)**

(56) Entgegenhaltungen:
**US-A1- 2008 223 175**

- **FOUAD N.E. ET AL: "Thermogravimetry of WO3 reduction in hydrogen: Kinetic characterization of autocatalytic effects", POWDER TECHNOLOGY, vol. 74, no. 1, 1 January 1993 (1993-01-01), Basel (CH), pages 31 - 37, XP055775424, ISSN: 0032-5910, DOI: 10.1016/ 0032-5910(93)80005-U**
- **BIASIN A ET AL: "Investigation of CaO-CO2reaction kinetics by in-situ XRD using synchrotron radia", CHEMICAL ENGINEERING SCIENCE, OXFORD, GB, vol. 127, 12 January 2015 (2015-01-12), pages 13 - 24, XP029201470, ISSN: 0009-2509, DOI: 10.1016/ J.CES.2014.12.058**

**Beschreibung**

Die vorliegende Erfindung betrifft ein Verfahren zur Herstellung von Wolframmetallpulvern durch Reduktion von Wolframoxid, das sich dadurch auszeichnet, dass die Eigenschaften der erhaltenen Metallpulver kontinuierlich im und während des laufenden Verfahrens überwacht werden.

Wolframmetall zeichnet sich durch seinen hohen Schmelz- und Siedepunkt aus und wird in einer Vielzahl von wissenschaftlichen, technischen und medizinischen Bereichen verwendet, so beispielsweise als Vorstufe von Wolframcarbid, das zur Herstellung von Hartmetall-Werkzeugen verwendet wird. Je nach Anwendung und Einsatzgebiet ergeben sich unterschiedliche Anforderungen und Spezifikationen an das Wolframmetall, das meist in Form von Pulvern eingesetzt wird. Allen Spezifikationen ist jedoch gemein, dass die Pulver zuverlässig in einer gleichbleibend hohen Qualität mit einer engen beziehungsweise definierten Primärkorngrößenverteilung zur Verfügung gestellt werden müssen.

US 2006/0051256 beschreibt eine Apparatur zur Herstellung von Pulvern, die ähnlich einem Schneckenextruder aufgebaut ist, wobei die Temperatur mittels verschiedener Heiz- und Kühlelemente kontrolliert werden kann. Durch die verwendete Schneckeneinheit in der Apparatur soll es möglich sein, das Wachstum der entstehenden Partikel je nach Bedarf zu steuern.

DE 38 02 811 betrifft ein Verfahren zur Herstellung eines Metallpulver-Agglomerats aus Einzelpartikeln, die zu mehr als 70 Gew.-% aus einem oder mehreren Metallen der Elemente Molybdän, Rhenium oder Wolfram und Bindemetallen aus der Gruppe Eisen, Kobalt, Nickel, Kupfer, Silber, Gold, Palladium, Platin, Rhodium, Chrom und Rhenium bestehen, wobei die Verbindungen der Metalle und der Bindermetalle in ionischen oder nicht-ionischen Flüssigkeiten gelöst und/oder homogen suspendiert werden, diese Lösungen und/oder Suspensionen zur Trockene gebracht werden und der so erhaltene Rückstand unterhalb von 600 °C nachgeröstet wird und anschließend unter reduzierenden Bedingungen bei Temperaturen von 600 bis 1200 °C zum Metallpulver umgesetzt wird.

WO 2017/162048 offenbart ein Verfahren zur Reduktion von Metalloxiden, in dem in einem Batch-Prozess die Reaktion zwischen einem starken Oxidationsmittel oder einem Metallhalogenid und einem Reduktionsmittel bei Temperaturen unter 580 °C dazu verwendet wird, das Metalloxid zu reduzieren.

Das Dokument "Thermogravimetry of WO3 reduction in hydrogen: Kinetic characterization of autocatalytic effects", Fouad N.E. et al, POWDER TECHNOLOGY, Bd. 74, Nr. 1, 1993, bezieht sich auf Thermogravimetrie (TGA)-Untersuchungen zur Reduktion von Wolframoxid, welche in einem Batchprozess und nicht in einem kontinuierlich arbeitenden Industrie-Ofenprozess stattfinden.

Zur Gewinnung von Wolframmetall können wolframhaltige Erze in einer oxidierenden Atmosphäre bei Temperaturen zwischen 500 bis 600 °C calciniert werden, um eventuelle Verunreinigungen zu entfernen. Durch Umsetzung mit Natronlauge wird $Na_2WO_4$ erhalten, welches durch eine Reihe von Umfällungen gereinigt und über Ionenaustausch oder Solventextraktion mit Ammoniak zu Ammoniumparawolframat kristallisiert wird. Das erhaltene Wolframat wird abfiltriert, getrocknet und anschließend durch Calcinieren bei Temperaturen von über 500 °C in reines Wolfram(VI)oxid überführt. Das eigentliche Metallpulver wird dann in kontinuierlich arbeitenden Ofenanlagen unter Verwendung von Wasserstoff als Reduktionsmittel oberhalb einer Temperatur von 650 °C aus dem Oxid gewonnen. Die Umsetzung des Oxids zum Metall läßt sich dabei anhand der folgenden Gleichung abbilden:

$$WO_3 + 3H_2 \rightarrow W + 3H_2O$$

Auch wenn im Stand der Technik eine Reihe von Verfahren zur Herstellung von Wolframmetall bekannt sind, bietet keines von ihnen die Möglichkeit einer kontinuierlichen Qualitätskontrolle des entstehenden Metallpulvers. Um die Qualität des erzeugten Wolframmetallpulvers zu überprüfen, werden in der Regel Proben aus dem Reaktionsstrom genommen und analysiert, wobei als Kenngrößen insbesondere der Umsatz der Reaktion und die Korngröße des gewonnenen Wolframmetallpulvers herangezogen werden. Besonders in den Fällen, in denen das Wolframmetall zu Wolframcarbid weiter umgesetzt werden soll, ist die Korngröße des Wolframmetallpulvers ein entscheidendes Qualitätsmerkmal. Da die Korngröße des Wolframcarbids in hohem Maße von der Korngröße des eingesetzten Wolframmetallpulvers abhängt, muss diese sehr genaue kontrolliert und eingestellt werden. Herkömmliche Verfahren, die im Stand der Technik zur Kontrolle der Qualität des Wolframmetallpulvers eingesetzt werden, haben den Nachteil, dass immer eine zeitliche Verzögerung zwischen der Probenahme und dem Vorliegen des Analyseergebnisses vorliegt, so dass eine unmittelbare Anpassung der Prozessparameter im Herstellungsprozess nicht möglich ist. Die Zeitverzögerung ergibt sich in der Regel durch die Notwendigkeit einer aufwendigen Probenaufbereitung und -analyse sowie gegebenenfalls Transportwegen. In der dafür benötigten Zeit, die abhängig von der vorliegenden Infrastruktur im Bereich von Stunden bis Tagen liegen kann, kann es somit sein, dass das Wolframmetallpulver nicht in der gewünschten Qualität produziert wird und somit Nebenausbeuten oder Bestände an nicht verwertbaren Pulverqualitäten entstehen, ohne dass eine entsprechende Anpassung der Prozessparameter vorgenommen werden kann. Diese unerwünschten Produkte führen zu einer hohen Kapitalbindung und im schlimmsten Fall zu einem hohen Verlust an Rohstoffen und Ressourcen. Um diesem Problem der zeitverzögerten Qualitätskontrolle und den damit einhergehenden Nachteilen begegnen zu können, ist es daher wünschenswert, die Qualitätskontrolle so vornehmen zu können, dass ein Eingreifen bereits zeitnah während des laufenden Produktionsprozesses möglich ist.

Bei der Herstellung von Wolframmetallpulver wird in der Regel der Sauerstoffgehalt, der mittlere Korndurchmesser und die spezifische Oberfläche herangezogen, um die Qualität der entstehenden Pulver beurteilen zu können. Die genannten Materialeigenschaften werden nach jeweils unterschiedlichen Methoden bestimmt, so dass eine Bestimmung während des laufenden Verfahrens nicht möglich ist oder mit unterschiedlichen Apparaturen erfolgen muss. Vielmehr ist zum Teil bei denen im Stand der Technik angewandten Analysenmethoden eine aufwendige und zeitintensive Probenvorbereitungen notwendig, um die genannten Materialeigenschaften bestimmen zu können, wodurch eine direkte Reaktion auf eventuelle Qualitätsverluste während des laufenden Prozesses nicht mehr möglich ist.

Es ist somit die Aufgabe der vorliegenden Erfindung ein Verfahren zur Herstellung von Wolframmetallpulvern zur Verfügung zu stellen, dass eine zeitgenaue und kontinuierliche Qualitätssicherung der produzierten Pulver erlaubt.

Es wurde überraschend gefunden, dass der Gehalt an während der Herstellung von Wolframmetall intermediär auftretendem Wolfram(IV)oxid ($WO_2$) als Maß für das Voranschreiten der Umsetzung und somit als Maß für die Qualität von Wolframmetallpulvern herangezogen werden kann. Weiterhin wurde überraschend gefunden, dass die Qualität des Wolframmetallpulvers anhand der Kristallitgröße des entstehenden Wolframmetallpulver bestimmt werden kann. Im Rahmen der vorliegenden Erfindung wurde ebenfalls gefunden, dass beide Parameter während des laufenden Betriebs "online" bestimmt werden können, so dass eine aufwendige Probenentnahme und -bearbeitung entfällt und zeitgenaue Messergebnisse erhalten werden, die, falls nötig, ein sofortiges Eingreifen in den Prozess erlauben.

Daher ist ein erster Gegenstand der vorliegenden Erfindung ein Verfahren zur Herstellung von Wolframmetallpulver durch Reduktion von Wolframoxid, welches die folgenden Schritte umfasst:

a) Bereitstellen eines Reaktionsstroms I enthaltend Wolframoxidpartikel;

b) Behandeln des Reaktionsstroms I mit einem Reduktionsmittel unter Erhalt eines Reaktionsstroms II enthaltend Wolframoxid und Wolframmetallpulver;

c) Messen des Gehalts an Wolfram(IV)oxid ($WO_2$), in dem Reaktionsstrom II;

d) Messen der Kristallitgröße des Wolframmetallpulvers in dem Reaktionsstrom II;

e) Vergleichen der in den Schritten c) und d) erhaltenen Werte mit vorgegebenen Sollwerten;

f) gegebenenfalls Anpassen der Prozessparameter,

dadurch gekennzeichnet, dass das Messen des Gehalts an Wolframoxid(IV) ( $WO_2$), und der Kristallitgröße des Wolframmetallpulvers während des Verfahrens durch Vorbeiführen des Reaktionsstroms an mindestens einer Analyseeinheit erfolgt.

Die vorliegende Erfindung zeichnet sich unter anderem dadurch aus, dass die Kristallitgröße des entstehenden Wolframmetallpulvers während des Prozesses kontinuierlich bestimmt wird und so als Qualitätsmerkmal herangezogen werden kann. Das Wolframmetallpulver besteht aus Primärpartikeln, die Agglomerate bilden können. Jedes einzelne Primärpartikel kann in Abhängigkeit von seiner Größe mono- oder polykristallin sein. Der Bereich eines Partikels, in dem eine regelmäßige Anordnung der Gitterzellen zu beobachten ist, wird als Kristallit (in der Literatur auch als Korn) bezeichnet. Diese Bereiche können sich über das gesamte Volumen eines Partikels erstrecken. Es ist jedoch auch möglich, dass in einem Partikel zwei oder mehrere Bereiche, in denen die Gitterzellen regelmäßig angeordnet sind, existieren, wobei sich die Ausrichtung der Hauptachsen zwischen diesen Bereichen unterscheiden kann. In diesem Fall sind zwischen den Bereichen Korngrenzen zu beobachten. Je kleiner die Kristallite sind umso stärker wird ein eintreffender Röntgenstrahl gestreut, was zu einer Verbreiterung eines durch Beugung entstandenen Röntgenreflexes am Detektor führt.

Mit Hilfe des erfindungsgemäßen Verfahrens ist eine kontinuierliche und direkte Überwachung des Reaktionsfortschritts und der Kristallitgröße des Produkts während des laufenden Verfahrens möglich, was mit den bisher praktizierten Stichproben und den erforderlichen zeitaufwendigen Laboruntersuchungen nicht erreicht werden konnte. Weiterhin ergibt sich durch das erfindungsgemäße Verfahren die Möglichkeit einer Rückkopplung, was notwendig ist um den Prozess gezielt zu regeln. So kann das Pulver in der gewünschten Qualität effizient und ohne Materialverluste hergestellt werden.

Das erfindungsgemäße Verfahren eignet sich besonders für die Qualitätssicherung bei der Herstellung nanoskaliger und feiner Wolframmetallpulver. Daher ist eine Ausführungsform des erfindungsgemäßen Verfahrens bevorzugt, bei der das erhaltene Wolframmetallpulver eine durchschnittliche Korngröße von 20 nm bis 5 $\mu$m, vorzugsweise 50 nm bis 3,5 $\mu$m aufweist, bestimmt mittels Fisher Sub Sieve Sizer FSSS I.m. nach ASTM B330. Weiterhin ist eine Ausführungsform des erfindungsgemäßen Verfahrens bevorzugt, in der das erhaltene Wolframmetallpulver eine spezifische Oberfläche von 0.05 $m^2$/g bis 10 $m^2$/g, vorzugsweise 0.15 $m^2$/g bis 6$m^2$/g aufweist, bestimmt mittels dem Verfahren zur Bestimmung der spezifischen Oberflächen an Pulvern nach BET (DIN ISO 9277).

Die vorliegende Erfindung beruht darauf, dass überraschend gefunden wurde, dass die bereits bekannte Korrelation zwischen der spezifischen Oberfläche (BET Messung nach DIN ISO 9277) und der mittleren Korngröße eines Pulvers auch auf Kristallite übertragen werden kann.

Im Gegensatz zu den im Stand der Technik herrschenden Vorurteilen hat sich im Rahmen der vorliegenden Erfindung herausgestellt, dass der bekannte Zusammenhang zwischen der Korn- oder Partikelgröße eines Pulvers und seiner BET-Oberfläche, der sich durch folgende Gleichung darstellen lässt:

$$d = 6/(\rho * BET) \qquad [ - Gleichung\ 1 - ]$$

wobei d die Partikelgröße, $\rho$ die physikalische Dichte des Materials und der BET-Wert die gemäß DIN ISO 9277 bestimmte spezifische Oberfläche ist.

Der Sauerstoffgehalt eines vollständig umgesetzten Wolframmetallpulvers ist proportional zur spezifischen Oberfläche des Pulvers und kann daher ebenfalls zur Charakterisierung von Wolframmetallpulvern herangezogen werden und dient gleichzeitig als Maß für die Vollständigkeit des Umsatzes der Reaktion. Beide Werte, die Kristallitgröße als auch der Sauerstoffgehalt, ausgedrückt als Anteil an $WO_2$, können mittels Röntgenbeugung bestimmt werden. Daher handelt es sich in einer bevorzugten Ausführungsform bei der im erfindungsgemäßen Verfahren verwendeten Analyseeinheit um ein Röntgendiffraktometer, wobei die Bestimmung der Kristallitgröße des Wolframmetallpulvers und des Gehalts an Wolframoxid vorzugsweise mittels Röntgenbeugung erfolgt. Durch die erfindungsgemäße Wahl der Kristallitgröße und des Gehalts an $WO_2$ im Reaktionsstrom als Parameter zur Qualitätssicherung weist das erfindungsgemäße Verfahren weiterhin den Vorteil auf, dass beide Materialeigenschaften mit der gleichen Messmethode bestimmt werden können, die Qualitätssicherung also kombiniert in einem Schritt erfolgen kann, so dass eine separate Bestimmung der Materialeigenschaften in jeweils separaten Messungen entfällt.

Die Herstellung des Wolframmetallpulvers erfolgt erfindungsgemäß durch Reduktion von Wolframoxid, wobei überraschend gefunden wurde, dass durch Beobachtung des Gehalts an Wolframoxid, insbesondere $WO_2$, der Fortschritt der Reaktion verfolgt werden kann. Je geringer der Gehalt an Wolframoxid im Reaktionsstrom, desto weiter fortgeschritten ist die Reaktion. Daher ist eine Ausführungsform bevorzugt, in der der Gehalt an Wolframoxid, insbesondere $WO_2$, im Reaktionsstrom II als Maß für den Reaktionsfortschritt dient.

Die in den Schritten c) und d) des erfindungsgemäßen Verfahrens ermittelten Werte werden mit vorgegebenen Sollwerten verglichen, um auf diese Weise den Fortschritt der Umsetzung sowie die Qualität des entstandenen Wolframmetallpulvers zu überprüfen. Die heranzuziehenden Sollwerte können dabei je nach Anforderung und individuellen Spezifikationen ausgewählt werden. Um einen belastbaren Vergleich zu erhalten, erfolgt der Vergleich in Schritt e) des erfindungsgemäßen Verfahrens wiederholt in kurzen zeitlichen Abständen vorzugsweise mit Hilfe eines Auswertungsmoduls, insbesondere computergestützt.

Das erfindungsgemäße Verfahren ist mit den bei der Herstellung von Wolframmetallpulver gängigen Reduktionsmitteln kompatibel. Die besten Ergebnisse bezüglich Umsatzes des Wolframoxids wurden bei der Verwendung von Wasserstoff als Reduktionsmittel beobachtet. Daher ist eine Ausführungsform bevorzugt, in der Wasserstoff als Reduktionsmittel verwendet wird.

Neben der Möglichkeit einer umfassenden Qualitätskontrolle zeichnet sich das erfindungsgemäße Verfahren weiterhin durch seine unkomplizierte Durchführung und die Möglichkeit einer unmittelbaren und kontinuierlichen Analyse des Reaktionsfortschritts und der Produktkontrolle aus, was unter anderem damit erzielt wird, dass die Bestimmung des Wolframoxidgehalts und der Kristallitgröße des Wolframmetallpulvers von derselben Analyseneinheit vorgenommen wird. Daher ist eine Ausführungsform bevorzugt, in der die Messung des Gehalts an Wolframoxid, insbesondere $WO_2$, und der Kristallitgröße des Wolframmetallpulvers in den Schritten c) und d) des erfindungsgemäßen Verfahrens simultan oder unmittelbar nacheinander erfolgt. Im Rahmen der vorliegenden Erfindung wird unter unmittelbar eine zeitliche Verzögerung von nicht mehr als drei Minuten verstanden, vorzugsweise nicht mehr als einer Minute, insbesondere nicht mehr als 30 Sekunden. Besonders bevorzugt werden die beiden Parameter in einer Messung, ganz besonders bevorzugt mit einer Aufnahme, insbesondere mit einem Röntgendiffraktogramm oder einem Ausschnitt aus einem Röntgendiffraktogramm bestimmt. Eine solche Ausführungsform hat den Vorteil, dass nur eine Messung vorgenommen werden muss und nur ein Sensor in der Analyseeinheit benötigt wird. Die Auswertung der bei der Messung erhaltenen Daten kann dann separat nach bekannten Methoden erfolgen. In einer alternativ bevorzugten Ausführungsform erfolgt die Bestimmung des Gehalts an Wolframoxid, insbesondere $WO_2$, und der Kristallitgröße des Wolframmetallpulvers in den Schritten c) und d) des erfindungsgemäßen Verfahrens in jeweils separaten Messungen, die jedoch von derselben Analyseeinheit vorgenommen werden.

Durch das erfindungsgemäße Verfahren ist eine unmittelbare Rückkopplung des Messergebnisses zu den Anlagenparametern möglich, wodurch die Prozessparameter während des Verfahrens ständig optimiert werden können. Daher ist eine Ausführungsform des erfindungsgemäßen Verfahrens bevorzugt, in der die in den Schritten c) und d) ermittelten Daten als Grundlage für die in Schritt f) des erfindungsgemäßen Verfahrens gegebenenfalls vorzunehmende Anpassungen der Prozess- und Anlagenparameter dienen. Dabei wird die Anpassung der Anlagen- und Prozessparameter vorzugsweise derart vorgenommen, dass der Gehalt an Wolframoxid und die Kristallitgröße des Wolframmetallpulvers den vorgegebenen Sollwerten entsprechen. Bei den Prozess- und Anlagenparametern, die auf Basis der in den Schritten c) und d) ermittelten Werte angepasst werden können, handelt es sich vorzugsweise um Druck, Temperatur, Temperaturverteilung, Volumen- und Massenstrom, Drehzahlen, Konzentrationen, Füllmengen, Taktzeiten und Strömungsgeschwindigkeit.

Die erfindungsgemäße Verfahrensführung erlaubt es, eine hohe Anzahl an Messungen pro Zeiteinheit vorzunehmen, wodurch auf Schwankungen in der Qualität der Produkte unmittelbar reagiert werden kann. Vorzugsweise beträgt die Anzahl an Messwerten pro Stunde, die im Rahmen des erfindungsgemäßen Verfahrens erzeugt werden, 1 bis 120, besonders bevorzugt 5 bis 12. Die Messungen erfolgen dabei vorzugsweise im und/oder am Reaktionsstrom der kontinuierlich arbeitenden Produktionsanlage, wodurch ein zeitlicher Verlauf des Messsignals und ein zeitgenaues Abbild der Reaktion erhalten werden kann. Eine Probenentnahme aus dem Produktstrom kann somit vorzugsweise entfallen. In diesem Zusammenhang hat es sich weiterhin als vorteilhaft erwiesen, wenn die Energiemenge, die pro Messung aufgewandt wird, ausgedrückt als Produkt von Messzeit und Messleistung, beispielsweise die Strahlungsleistung eines Diffraktometers, nicht zu hoch angesetzt wird, um einen Einfluss auf die ablaufende Reaktion zu vermeiden. Daher ist eine Ausführungsform bevorzugt, in der die Messungen bei einer Strahlungsenergie von 50 bis 500 kJ, vorzugsweise 80 bis 250 kJ, vorgenommen werden. Dabei berechnet sich die Energie aus dem Produkt von Beschleunigungsspannung U [Volt], dem Röhrenstrom I [Ampere] und Bestrahlungszeit t [Sekunden] nach der folgenden Gleichung:

$$E = U[V] * I[A] * t[s]$$

Das erfindungsgemäße Verfahren erlaubt eine unmittelbare Kontrolle und umfassende Beurteilung der Qualität des Wolframmetallpulvers während des gesamten Verfahrens. So ist es beispielsweise möglich, den zu analysierenden Reaktionsstrom an unterschiedlichen Analyseeinheiten vorbeizuführen, die sich an unterschiedlichen Stellen entlang des Prozesslaufs befinden, um beispielsweise die Reaktion und das Verfahren in verschiedenen Stadien überwachen zu können.

Vorzugsweise befindet sich mindestens eine Analyseeinheiten dort, wo das Produkt aus dem Prozess ausgetragen wird, beispielsweise am Produktaustrag eines kontinuierlich arbeitenden Industrieofens.

Daher ist eine Ausführungsform des erfindungsgemäßen Verfahrens bevorzugt, in der der Reaktionsstrom II an mehr als einer Analyseeinheit vorbeigeführt wird. In einer bevorzugten Ausführungsform sind mehrere Analyseeinheiten entlang des Reaktionsstroms verteilt, um eine kontinuierliche Überwachung während des gesamten Prozesses zu ermöglichen. Ebenfalls bevorzugt ist eine Ausführungsform, in der mehrere Analyseeinheiten unmittelbar hintereinander angeordnet sind. Ebenfalls bevorzugt ist eine Kombination dieser beiden Ausführungsformen. Dabei sind die verschiedenen Analyseeinheiten vorzugsweise derart ausgestaltet, dass sie miteinander im Austausch stehen und zentral von einer Steuerungseinheit gesteuert und die erhaltenen Daten ausgelesen werden können.

Ein weiterer Gegenstand der vorliegenden Erfindung ist eine Vorrichtung zur Durchführung des erfindungsgemäßen Verfahrens, wobei die Vorrichtung wenigstens eine Analyseeinheit zur Messung des Gehalts an Wolframoxid, insbesondere $WO_2$, und der Kristallitgröße von Wolframmetallpulver in einem Reaktionsstrom aufweist, wobei es sich bei der Analyseeinheit vorzugweise um ein Röntgendiffraktometer handelt.

Die vorliegende Erfindung eignet sich insbesondere zur Qualitätssicherung bei der Herstellung von Wolframmetallpulver. Daher ist ein weiterer Gegenstand der vorliegenden Erfindung ein Verfahren zur Qualitätssicherung bei der Herstellung von Wolframmetallpulver, bei dem die Qualität des Wolframmetallpulvers durch Überwachung der Parameter der Kristallitgröße der Wolframmetallpulver und des Gehalts an Wolfram(IV)oxids ($WO_2$) im Produktionsstrom erfolgt, wobei die Bestimmung dieser Materialeigenschaften vorzugsweise mittels Röntgendiffraktometrie erfolgt.

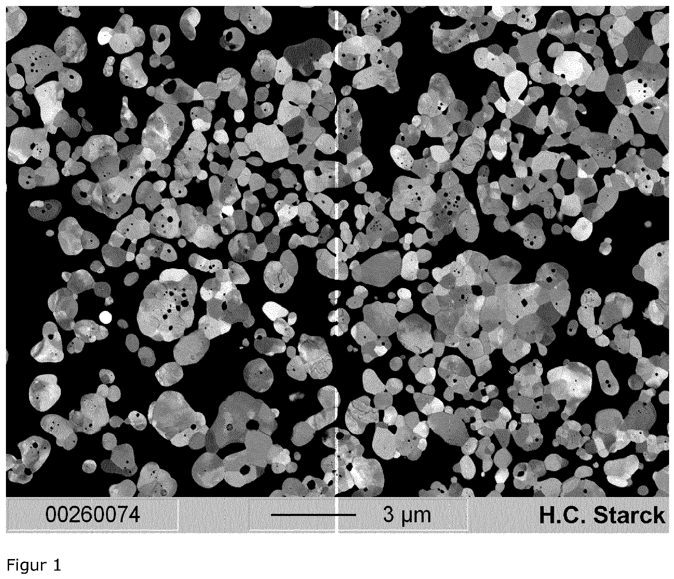

Figur 1 zeigt eine REM-Aufnahme eines in Harz eingebetteten und angeschliffenen Wolframmetallpulvers, das gemäß dem erfindungsgemäßen Verfahren hergestellt wurde; zu sehen sind Partikel sowie mono- und polykristalline Bereiche.

**Patentansprüche**

1.   Verfahren zur Herstellung von Wolframmetallpulvern durch Reduktion von Wolframoxid, welches die folgenden Schritte umfasst:

a) Bereitstellen eines Reaktionsstroms I enthaltend Wolframoxidpartikel;

b) Behandeln des Reaktionsstroms I mit einem Reduktionsmittel unter Erhalt eines Reaktionsstroms II enthaltend Wolframoxid und Wolframmetallpulver;

c) Messen des Gehalts an Wolframoxid, insbesondere $WO_2$, in dem Reaktionsstrom II;

d) Messen der Kristallitgröße des Wolframmetallpulvers in dem Reaktionsstrom II;

e) Vergleichen der in den Schritten c) und d) erhaltenen Werte mit vorgegebenen Sollwerten;

f) gegebenenfalls Anpassen der Prozessparameter,

**dadurch gekennzeichnet, dass** das Messen des Gehalts an Wolframoxid, insbesondere $WO_2$, und der Kristallitgröße des Wolframmetallpulvers während des Verfahrens durch Vorbeiführen des Reaktionsstroms an einer Analyseeinheit erfolgt.

2. Verfahren gemäß Anspruch 1, **dadurch gekennzeichnet, dass** das erhaltene Wolframmetallpulver eine spezifische Oberfläche von 0.05 $m^2/g$ bis 10 $m^2/g$, vorzugsweise 0.15 $m^2/g$ bis 6$m^2/g$ aufweist, bestimmt mittels dem Verfahren zur Bestimmung der spezifischen Oberflächen an Pulver nach BET (DIN ISO 9277).

3. Verfahren gemäß wenigstens einem der Ansprüche 1 oder 2, **dadurch gekennzeichnet, dass** es sich bei der im erfindungsgemäßen Verfahren verwendeten Analyseeinheit um ein Röntgendiffraktometer handelt.

4. Verfahren gemäß wenigstens einem der vorangehenden Ansprüche, **dadurch gekennzeichnet, dass** der Gehalt an Wolframoxid, insbesondere $WO_2$, im Reaktionsstrom II als Maß für den Reaktionsfortschritt dient.

5. Verfahren gemäß wenigstens einem der vorangehenden Ansprüche, **dadurch gekennzeichnet, dass** die Bestimmung des Gehalts an Wolframoxid, insbesondere $WO_2$, und der Kristallitgröße in den Schritten c) und d) simultan erfolgt, vorzugsweise mit einer Messung, besonders bevorzugt mit einer Aufnahme, insbesondere mit einem Röntgendiffraktogramm oder einem Ausschnitt aus einem Röntgendiffraktogramm.

6. Verfahren gemäß wenigstens einem der vorangehenden Ansprüche, **dadurch gekennzeichnet, dass** die Anpassung der Prozessparameter so vorgenommen wird, dass der Gehalt an Wolframoxid, insbesondere $WO_2$, und die Kristallitgröße den vorgegebenen Sollwerten entsprechen.

7. Verfahren gemäß wenigstens einem der vorangehenden Ansprüche, **dadurch gekennzeichnet, dass** es sich bei den Prozessparametern um Druck, Temperatur, Temperaturverteilungen, Volumen- und Massenströmen, Drehzahlen, Konzentrationen, Füllmengen, Taktzeiten und Strömungsgeschwindigkeit handelt.

8. Verfahren gemäß wenigstens einem der vorangehenden Ansprüche, **dadurch gekennzeichnet, dass** die Anzahl an Messwerten pro Stunde, die im Rahmen des erfindungsgemäßen Verfahrens erzeugt werden, 1 bis 120, besonders bevorzugt 5 bis 12 beträgt.

9. Verfahren gemäß wenigstens einem der vorangehenden Ansprüche, **dadurch gekennzeichnet, dass** die Messung(en) in den Schritten c) und d) bei einer Strahlungsenergie von 50 bis 500 kJ, vorzugsweise 80 bis 250 kJ, vorgenommen werden.

10. Vorrichtung zur Durchführung eines Verfahrens gemäß wenigstens einem der Ansprüche 1 bis 9, **dadurch gekennzeichnet, dass** die Vorrichtung wenigstens eine Analyseeinheit zur Messung des Gehalts an Wolframoxid, insbesondere $WO_2$, und der Kristallitgröße von Wolframmetallpulvern in einem Reaktionsstrom aufweist.

## Claims

1. A process for producing tungsten metal powders by reducing tungsten oxide, which comprises the following steps:

a) providing a reaction stream I containing tungsten oxide particles;

b) treating the reaction stream I with a reducing agent to obtain a reaction stream II containing tungsten oxide and tungsten metal powder;

c) measuring the content of tungsten oxide, especially $WO_2$, in the reaction stream II;

d) measuring the crystallite size of the tungsten metal powder in the reaction stream II;

e) comparing the values obtained in steps c) and d) with predetermined target values;

f) optionally adjusting the process parameters;

**characterized in that** said measuring of the content of tungsten oxide, especially $WO_2$, and of the crystallite size of the tungsten metal powder during the process is effected by guiding the reaction stream past at least one analytical unit.

2. The process according to claim 1, **characterized in that** the tungsten metal powder obtained has a specific surface area of 0.05 $m^2$/g to 10 $m^2$/g, preferably 0.15 $m^2$/g to 6 $m^2$/g, as determined by the method for determining specific surface areas of powders according to BET (DIN ISO 9277).

3. The process according to at least one of claims 1 or 2, **characterized in that** the analytical unit used in the process according to the invention is an X-ray diffractometer.

4. The process according to at least one of the preceding claims, **characterized in that** the content of tungsten oxide, especially $WO_2$, in the reaction stream II serves as a measure for the reaction progress.

5. The process according to at least one of the preceding claims, **characterized in that** the determination of the content of tungsten oxide, especially $WO_2$, and of the crystallite size in steps c) and d) is effected simultaneously, preferably in one measurement, more preferably with one recording, especially with an X-ray diffractogram or a section of an X-ray diffractogram.

6. The process according to at least one of the preceding claims, **characterized in that** the adaptation of the process parameters is effected in such a way that the content of tungsten oxide, especially $WO_2$, and the crystallite size correspond to the predefined target values.

7. The process according to at least one of the preceding claims, **characterized in that** said process parameters include pressure, temperature, temperature distribution, volume and mass flow, rotational speeds, concentrations, filling quantities, cycle times, and flow rate.

8. The process according to at least one of the preceding claims, **characterized in that** the number of measured values per hour, which are produced within the scope of the process according to the invention, is from 1 to 120, more preferably from 5 to 12.

9. The process according to at least one of the preceding claims, **characterized in that** the measurements in steps c) and d) are effected at a radiated energy of from 50 to 500 kJ, preferably from 80 to 250 kJ.

10. A device for performing a process according to at least one of claims 1 to 9, **characterized in that** said device includes at least one analytical unit for measuring the content of tungsten oxide, especially $WO_2$, and of the crystallite size of tungsten metal powders in a reaction stream.

**Revendications**

1. Procédé de production de poudres de tungstène métallique par réduction d'oxyde de tungstène, comprenant les étapes suivantes consistant à :

   a) fournir un flux réactionnel I contenant des particules d'oxyde de tungstène ;
   b) traiter le flux réactionnel I avec un agent réducteur pour obtenir un flux réactionnel II contenant de l'oxyde de tungstène et une poudre de tungstène métallique ;
   c) mesurer la teneur en oxyde de tungstène, notamment en $WO_2$, dans le flux réactionnel II ;
   d) mesurer la taille des cristallites de la poudre de tungstène métallique dans le flux réactionnel II ;
   e) comparer les valeurs obtenues dans les étapes c) et d) avec des valeurs cibles prédéfinies ;
   f) ajuster les paramètres du processus si nécessaire,

   **caractérisé en ce que** l'étape consistant à mesurer la teneur en oxyde de tungstène, notamment en $WO_2$, et la taille des cristallites de la poudre de tungstène métallique est effectuée au cours du processus en faisant passer le flux réactionnel devant une unité d'analyse.

2. Procédé selon la revendication 1, **caractérisé en ce que** la poudre de tungstène métallique obtenue a une surface spécifique de 0,05 m$^2$/g à 10 m$^2$/g, de préférence de 0,15 m$^2$/g à 6 m$^2$/g, déterminé en utilisant la méthode de détermination de la surface spécifique des poudres selon BET (DIN ISO 9277).

3. Procédé selon au moins l'une des revendications 1 ou 2, **caractérisé en ce que** ladite unité d'analyse utilisée dans le procédé selon l'invention est un diffractomètre à rayons X.

4. Procédé selon au moins l'une des revendications précédentes, **caractérisé en ce que** la teneur en oxyde de tungstène, en particulier en WO$_2$, dans le flux réactionnel II sert de mesure de l'avancement de la réaction.

5. Procédé selon au moins l'une des revendications précédentes, **caractérisé en ce que** la détermination de la teneur en oxyde de tungstène, en particulier WO$_2$, et de la taille des cristallites est effectuée simultanément dans les étapes c) et d), de préférence avec une seule mesure, de préférence encore avec une seule exposition, notamment avec un diffractogramme de rayons X ou une section d'un diffractogramme de rayons X.

6. Procédé selon au moins l'une des revendications précédentes, **caractérisé en ce que** l'ajustement des paramètres du processus est effectué de telle manière que la teneur en oxyde de tungstène, notamment en WO$_2$, et la taille des cristallites correspondent aux valeurs cibles spécifiées.

7. Procédé selon au moins l'une des revendications précédentes, **caractérisé en ce que** les paramètres du processus sont la pression, la température, les distributions de température, les débits volumiques et massiques, les vitesses de rotation, les concentrations, les quantités de remplissage, les temps de cycle et la vitesse d'écoulement.

8. Procédé selon au moins l'une des revendications précédentes, **caractérisé en ce que** le nombre de valeurs mesurées par heure générées dans le cadre de la méthode selon l'invention est de 1 à 120, de préférence de 5 à 12.

9. Procédé selon au moins l'une des revendications précédentes, **caractérisé en ce que** la ou les mesures des étapes c) et d) sont effectuées à une énergie de rayonnement de 50 à 500 kJ, de préférence de 80 à 250 kJ.

10. Dispositif pour la mise en œuvre d'un procédé selon au moins l'une des revendications 1 à 9, **caractérisé en ce que** ledit dispositif possède au moins une unité d'analyse pour mesurer la teneur en oxyde de tungstène, notamment WO$_2$, et la taille des cristallites des poudres de tungstène métallique dans un flux réactionnel.

00260074     3 µm     H.C. Starck

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060051256 A
- DE 3802811

- WO 2017162048 A

**In der Beschreibung aufgeführte Nicht-Patentliteratur**

- **FOUAD N.E. et al.** Thermogravimetry of WO3 reduction in hydrogen: Kinetic characterization of autocatalytic effects. *POWDER TECHNOLOGY*, 1993, vol. 74 (1)